# EUROPEAN PATENT SPECIFICATION

(11) **EP 1 446 019 B1**
(45) Date of publication and mention of the grant of the patent: **14.03.2007**
(21) Application number: 02787535.0
(22) Date of filing: 01.11.2002
(51) Int. Cl.: A23D 7/00, A23D 7/015, A23L 1/226

(54) **WATER CONTINUOUS FOOD PRODUCT WITH COOLING FLAVOUR**
NAHRUNGSMITTELPRODUKT MIT KONTINUIERLICHER WASSERPHASE MIT ERFRISCHUNGSEFFEKT
PRODUIT ALIMENTAIRE A PHASE AQUEUSE CONTINUE CONTENANT UN AROME RAFRAICHISSANT

(30) Priority: 23.11.2001 EP 01204520
(43) Date of publication of application: 18.08.2004
(73) Proprietor: UNILEVER N.V., 3133 AT Vlaardingen (NL); UNILEVER PLC, London, Greater London EC4 4BQ (GB)
(72) Inventor: Pelan, Barbara M. C., Unilever R & D Vlaardingen, 3133 AT Vlaardingen (NL); VERMEULEN, Cornelis, Johannes, 3137 DH Vlaardingen (NL); Wemmenhoven, Belinda, Unilever R & D Vlaardingen, 3133 AT Vlaardingen (NL)
(74) Representative: Joppe, Hermina Laura Petronella
(86) International application number: PCT/EP2002/012185
(87) International publication number: WO 2003/043431

(56) References cited:
- WO-A-93/23005
- WO-A-96/03888
- WO-A-97/04660
- WO-A-97/08956
- US-A- 4 136 163
- US-A- 5 843 466

## Description

### Field of the invention

The invention relates to a water continuous spreadable acidified food product suitable for use as a table spread which spread comprises a cooling flavour.

### Background to the invention

Table spreads are in many cultures used as an underlayer on bread or toast on which other products such as cheese, jam, peanut butter, salad can be applied. Traditionally butter was the main table spread, followed by margarine.
Examples of margarine type products are disclosed in WO-A-99/49738. Both butter and margarine compositions are fat continuous products leaving a strong fatty impression after consumption. More recently, water continuous spreads have been described in WO-A-97/0895,6 and WO-A-97/04660 which disclose a creamy, cultured dairy based water continuous spread comprising less than 35% fat, up to 4.5% milk protein, gelatin or a gelatin replacer, the spread having a pH value between 4.6 and 5.2, and the spread having a butter-like mouthfeel, texture and taste.

For such water continuous products it is an object of the current invention to provide products that show a cool/fresh impression upon consumption. It is a further object of the invention that the resulting products are not significantly influenced with respect to other taste or flavour attributes than the ones related to cooling and freshness.

### Summary of the invention

It has surprisingly been found that water continuous, acidified food products that comprise a relatively low amount of fat in combination with a cooling flavour, show a fresh, cool taste impression.

Therefore the invention relates to a spreadable food product comprising a dispersed oil phase and a continuous aqueous phase said product comprising from 10 to 40 wt% fat and from 0.05 to 15 wt% protein, said food product having a pH value from 3.7 to 5.5, wherein the food product comprises from 0.001 to 1 wt% of a cooling flavour.

In a further aspect the invention relates to a process for the preparation of these products.

### Detailed description of the invention

It is an advantage of the products according to the current invention that they show a cooling, tingling and fresh impression in taste and flavour while other taste and flavour attributes are not strongly influenced by the presence of the cooling flavour unless very high levels of cooling flavour are used. This is contrary to our experience with fat continuous products for which added cooling flavours influence the fruity flavour and salty taste impression of the products. Said influence, which is considered negative by many consumers, is undesired and surprisingly absent in the products of the selected composition according to the invention.

The effect of the cooling flavour on sensory parameters is determined by a panel trained in describing products in terms of sensory parameters. The panel is trained both in tasting of the products and in giving an objective description of their taste/flavour impression of the products. The panel members are able to objectively describe the isolated taste and flavour attributes of food products.

The invention relates to food products that are spreadable. Spreadable is defined as being easily spread with a knife on a substrate such as bread, without tearing the bread at the ambient temperature of the product during spreading. The products preferably are characterised by a Stevens hardness value hardness at 10°C of 50-500 g and of 50-250 g at 20°C. The method to determine Stevens hardness is described in the examples. Preferred products show a Stevens hardness of from 75 to 500 g, preferably 100 to 500 g at 5 °C and from 30 to 250, preferably 50 to 250 g at 20 °C.
In the context of the invention spreadable products encompass spoonable products with a texture such as those disclosed in EP-A-540087.

In the description and claims where weight% is used this is weight% on total product weight unless otherwise is indicated.

In the description and claims the terms "oil" and "fat" are used interchangeably.

One advantage of the products according to the invention is that they on the one hand have a rich, creamy mouthfeel and taste with a balanced flavour and limited salty taste and on the other hand they leave an impression which is a mixture of refreshment/tingling mouthfeel and cooling. This effect was found to last surprisingly long.
The use of these products as a table spread in daily use ensures hat the consumer has a pleasant, cool and refreshed mouth feel after consumption for example during lunch or breakfast.

The long lasting, cooling, tingling mouthfeel is believed to be due to the combination of an acidic pH, a fat content from 10 to 40 wt% and a defined amount of cooling flavour between from 0.001 to 1 wt%.

Cooling flavours are well known compounds in the art of flavour and taste. Cooling flavours are for example disclosed in US-A-5,843,466 which suggests that coolant compositions such as N-substituted p menthane carboxamide can be used in dairy products in an amount of 0.001 to 1 wt%.
Cooling flavours are also disclosed in EP-A-1,040,765 and US-A-4,136,163; which are incorporated by reference.

For the current products, the cooling flavour is preferably selected from the group of menthol, N substituted-p-menthane carboxamide, ketal, N,N-dimethyl2-ethylbutanamide, N,N-diethyl 2,2 dimethyl propanamide, 2,3-p-menthanediol, 3-(1-menthoxy) propane-1,2-diol, cubebol, mono menthylsuccinate, menthyl glutarate, derivatives or combinations thereof.

In a more preferred embodiment, the cooling flavour is menthol, a derivative thereof such as Menthol-1, menthyl glutarate or N-substituted-p-menthane carboxamide or a combination thereof. Even more preferred the cooling flavour is a combination of menthol and N-substituted-p-menthane carboxamide.

Examples of the preferred cooling flavours are Cooler II aroma code 13.62.0316 ex IFF (menthyl glutarate) and cooling flavour liquid code 17.80.3732 ex IFF (Menthol-1) and WS-3 ex Givaudan.

According to another embodiment, the cooling flavour shows at least limited fat solublity. Without wishing to be bound by any theory it is believed that the presence of at least part of the cooling flavour in the dispersed fat phase contributes to the long lasting cooling/tingling effect of these products.

The amount of cooling flavour should be such that a product with a pleasant cooling effect is obtained whereas preferably burning and bitterness are avoided. The amount of cooling flavour is from 0.001 to 1 wt%, preferably the amount is from 0.01 to 0.1 wt%, more preferred from 0.01 to 0.06 wt%.
Most preferably N-substituted-p-menthane carboxamide is included in the final product in an amount of 0.005 to 0.1 wt%, more preferred from 0.01 to 0.06 wt%.

The products according to the invention comprise a dispersed fat phase. It is essential that the products are water continuous and that the fat phase is dispersed. We have found that the effect of cooling/tingling is accompanied by an undesired change in other sensory parameters in fat continuous products.

In the products according to the invention optionally a biopolymer is present.
The biopolymer is preferably selected from the group comprising gelatin, locust bean gum , guar gum, tara gum, amylopectin, methylcellulose, alginate or combinations thereof.

The concentration of biopolymer in food product according to the invention is preferably from 0.01 to 3 wt%, more preferably from 0.5 to 1.5 wt%. It will be appreciated that each individual biopolymer will have its own optimal concentration which may depend on characteristics of the food product such as the fat content, pH and salt content.

The protein is preferably selected from the group comprising milk protein, soy protein, pea protein or combinations thereof. The use of milk protein as at least part of the protein is highly preferred because of the positive effect of milk protein on the taste and flavour of the final product.

Suitable sources of milk protein are for example selected from the group comprising milk, skimmed milk powder, butter milk powder, butter serum powder, whey powder, whey protein concentrate, whey protein isolate, caseinate. The most preferred protein is protein originating from butter milk because of its superb taste and flavour contribution.

The amount of protein is from 0.05 to 15 wt%, preferably from 2 to 10 wt%, more preferred from 1 to 5 wt%.

The products according to the invention comprise from 5 to 40 wt% fat. Preferred products comprise 15 to 35 wt%, more preferred from 20 to 35 wt% fat.

The fat can be any fat such as dairy fat, vegetable fat or a marine oil. Preferably the fat is dairy fat or vegetable fat or a combination thereof. Preferred fats or fat blends show a quick melting behaviour. Preferred fats or fat blends therefore show a difference between solid content at 10 °C (N10) and solid content at 35 °C (N35) divided by 25 ((N10-N25)/25) of at least 1.5, preferably at least 2, more preferred from 2 to 6, most preferred from 2 to 4.

Preferably the solids content of the fat or fat blend that forms the dispersed phase is from 5 to 95% at 10 °C, from 1 to 50% at 20 °C and from 0 to 10% at 35 °C. More preferred the solids content is from 25 to 75 at 10 °C, from 7.5 to 35 at 20° C and from 0 to 5 at 35° C. Even more preferred the solids content is from 60 to 75 at 10 °C, from 10 to 35 at 20° C and from 0 to 5 at 35° C.

Even more preferred the same profile of solid fat is determined, for the isolated fat phase of the product after it has been removed from the product. The method to determine solid fat content is disclosed in the examples.

The above solid fat profile can be obtained by a variety of fats or combination of fats in a fat blend. The fat is preferably selected from the group comprising coconut oil, palm oil, palm kernel oil, soybean oil, rapeseed oil, sunflower oil, safflower oil, or fully or partially hardened fractions thereof. Optionally the fat is an interesterified fat blend.
Most preferred the fat comprises at least hardened coconut oil.

Optionally the products according to the invention comprise an emulsifier. Preferably the amount of emulsifier is below 1.3 wt%, more preferred below 1 wt%. Suitable emulsifiers are for example monoglycerides (saturated or unsaturated), diglycerides, phospospholipids such as lecithin.

Optionally, usual additives for emulsions such as salt, herbs, spices, flavours, colouring matter, preservatives and the like may be added, although it is believed that for obtaining a suitable underlayer none of these is needed.

Normally, for use as a spread at least some salt will be present. The amount of salt may vary depending on the consumer preference in a specific country, but an amount between 0.1 and 3 wt%, preferably 0.5 to 1.5 wt% is generally recommended. The preferred salt is sodium chloride.

The products have a pH of from about 3.7 to 5.5, preferably between 4.2 and 5.5, more preferably between 4.4 and 5.2, and most preferred between 4.6 and 5.0.
Acidification of the starting ingredients to this pH may be obtained by any suitable method such as microbial acidification or chemical acidification for example using lactic acid, glucono deltalactone or another acidifying agent. The pH can be further adjusted by the use of a base such as sodium hydroxide.

In a further aspect the invention relates to a process for preparing the products according to the invention. In general any suitable process can be applied. We have found that it is preferred that the cooling flavour is added directly after acidification, preferably before further homogenisation. Therefore in a further aspect the invention relates to a process for the preparation of a food product according to the invention comprising the steps of
a) preparation of an aqueous phase comprising protein and optionally biopolymer
b) mixing the aqueous phase with a fat phase at a temperature of a about 40 to 70 °C
c) heating the mixture obtained in step (b) for pasteurisation or sterilisation
d) homogenisation of the mixture of step (c) at a pressure of between 100 and 400 bar, preferably at a temperature above the melting temperature of the fat
e) acidification to a pH from 4.2 to 5.5
g) addition of cooling flavour
h) homogenisation at a pressure of between 100 and 400 bar at a temperature above the melting point of the fat.

The invention will now be illustrated by the following, nonlimiting examples.

### Examples

### General

### Method to determine solid fat content

The solid fat content can be measured by a suitable analytical method such as NMR. The method used is low resolution NMR with Bruker Minispec apparatus. Reference is made to the Bruker minispec application notes 4,5 and 6.

The percentage of solid fat determined by the low resolution NMR technique is defined as the ratio of the response obtained from the hydrogen nuclei in the solid phase and the response arising from all the hydrogen nuclei in the sample. The product of this ratio and one hundred is termed the low resolution NMR solids percent. No correction is made for variations in the proton density between solid and liquid phase. The NMR solids percent for a sample measured at t °C was given the symbol Nₜ.

Suitable instruments adapted to determine the solids fat content are the Bruker Minispecs p20i^{tm}, pc20^{tm}, pc120^{tm}, pc120s^{tm}, NMS120^{tm} and MQ20^{tm}.

Stabilization and tempering procedure was as follows:
- melt fat at 80 °C
- 5 minutes at 60 °C
- 60 minutes at 0 °C
- 30-35 minutes at each chosen measuring temperature.

### Stevens hardness

The firmness of the products is determined by measuring the force required to penetrate a cylindrical probe in the product. The samples are stored for 7 days at 5 °C, and stored at 5, 10, 20, 25, or 35 °C for 5 hours before the firmness measurement; sample height 5 cm; cylindrical probe of 0.5 inch thickness; compression rate 2 mm/s; penetration depth 20 mm.

### Composition

### Example 1-4: according to the invention

Comparative example C1: water continuous, no cooling flavour, a Comparative example C2a,b/c3a,b: fat continuous, 0.04wt% cooling flavour (C2/3A) and 0% cooling flavour (C2/3B). C2 products comprise 70% fat and c3 products comprise 40% fat.

**Table 1 : Compositions in wt% on total product**

| Ingredient | 1 | 2 | 3 | 4 | C1 | C2** | C3** |
|---|---|---|---|---|---|---|---|
| Fat* | 25 | 21.0 | 22 | 22 | 22 | 70 | 40 |
| Whey powder concentra te (72% protein) Nutrilac QU7560 | 1.75 | 1.75 | 1.75 | 1.75 | 1.75 | | |
| Skim milk powder | 6.25 | 6.25 | 6.25 | 6.25 | 6.25 | | |
| Locust Bean Gum (LBG) | 0.3 | 0.3 | 0.3 | 0.3 | 0.3 | | |
| Gelatin 250 bloom | 0.7 | 0.7 | 0.7 | 0.7 | 0.7 | | |
| Salt | 0.3 | 0.3 | 0.3 | 0.3 | 0.3 | 0.3 | 0.3 |
| Potassium sorbate | 0.1 | 0.1 | 0.1 | 0.1 | 0.1 | | |
| EDTA | 0.01 | 0.01 | | | | | |
| B-carotene solution in fat (1%) | 0.005 | 0.005 | 0.03 | 0.03 | 0.03 | 0.1 | 0.15 |
| Lactic Acid | 0.48 | 0.48 | 0.48 | 0.48 | 0.48 | | |
| Menthol flavour (095-00674 Givaudan) # | 0.04 | 0.04 | 0.04 | 0.06 | | 0.04 | 0.04 |
| Dairy flavour cocktail | | | | | | 0.01 | 0.01 |
| Purity LFS | | | | | | - | 6 |
| Lecithin (Bolec ZT) | | | | | | 0.1 | - |
| Mono/di glyceride s (Hymono 8903) | | | | | | 0.2 | - |
| Demineral ised water | Up to 100% | Up to 100% | Up to 100% | Up to 100% | Up to 100% | Up to 100% | Up to 100% |

| | | | | | | | |
|---|---|---|---|---|---|---|---|
| *: Fat in example 1 is a palm kernel oil with a slip melting point of 38 °C. Fat in example 2 is a coconut oil with a slip melting point of 31 °C. The fat in examples 3 and 4 is a blend of coconut oil and palm kernel oil. The fat in the fat continuous sample is a standard margarine type fat bend comprising a hardstock and a liquid oil. #: n-ethyl-5-methyl-2-(1 methylethyl)-cyclohexane carboxamide **: c2a, respectively c3a refers to product with cooling flavour. C2b, respectively c3b refers to product without cooling flavour | | | | | | | |

### Process

The following process was used for the preparation of the products according to the invention:

### Product processing example 1-4, c1

Water phase and fat phase ingredients except acids and cooling flavour were mixed at about 60 °C. The composition was pasteurized at 85°C for 10 minutes, and cooled down to 44°C after which homogenisation at 200 bar took place. To the homogenized composition lactic acid was added, until a pH of about 4.8 was reached. Acidification was followed by heating the mixture to 85 °C. Cooling flavour was added. The obtained product was homogenized at 300 bar, and subsequently heated to a temperature of 75°C for filling the small containers. The product was cooled down to below 10°C and stored at chill temperature (about 5 °C).

### Product processing

Fat continuous system, example c2,c3.

The ingredients for spread were mixed in premix tank at 60°C. The pre-emulsion was processed through a votator line with the following process steps and settings:
1. The pre-emulsion was pumped through a shear pump at 60°C. Through put 4.5kg/hour. Line pressure 10bars for the 70% fat and 5bars for the 40%fat spreads.
2. A-unit scrape-surface heat exchanger run at 800rpm inlet temperature 55°C and outlet temperature 25°C.
3. A-unit scrape-surface heat exchanger run at 800rpm inlet temperature 25°C and outlet temperature 15°C.
4. A-unit scrape-surface heat exchanger run at 800rpm inlet temperature 15°C and outlet temperature 10°C.
5. The spread was further worked in pin stirrer, C-unit running at 200rpm at 10°C before filling.

### Result

The products of example 1 -4 could be applied on bread without tearing the bread.

The products 1 and 2 were tasted by a consumer panel. The products were indicated to leave a pleasant, creamy, fresh and cooling impression.

### Comparative examples/example 1-4.

A consumer panel compared the products of example 1 and 2 to standard products without the cooling flavour according to the invention. The composition of this product was exactly the same as composition of example 1 and 2 but for the flavour component.
This comparative product was scored to only show a very low cooling/tingling mouthfeel.

A trained QDA panel of 15 persons compared products of example 3, 4, c1 and c2a,b, c3a,b. They scored the products on several taste and flavour attributes on a line scale from 0 to 100. The products were stored at 10 °C before testing and each product was offered twice to the panel members.

The panel concluded that the fat continuous products c2a and c3a with cooling flavour showed a more fruity taste and odour than the same product, c2b, respectively c3b, without cooling flavour. Besides this change also the perception of salty taste was influenced by the addition of cooling flavour to the fat continuous product.

For the water continuous products of example 3 and 4 the panel concluded that they showed an increasing mint, cooling and tingling effect, the higher the amount of cooling flavour added. Compared to C1 (no cooling flavour) these products did not show a difference in the other taste and flavour attributes.

## Claims

1. Spreadable food product comprising a dispersed oil phase and a continuous aqueous phase said product comprising from 10 to 40 wt% fat and from 0.05 to 15 wt% protein, said food product having a pH value from 3.7 to 5.5, **characterised in that** the food product comprises from 0.001 to 1 wt% of a cooling flavour.

2. Food product according to claim 1 wherein the cooling flavour is selected from the group of menthol, N substituted-p-menthane carboxamide, ketal, N,N-dimethyl2-ethylbutanamide, N,N-diethyl 2,2 dimethyl propanamide, 2,3-p-menthanediol, 3-(1-menthoxy) propane-1,2-diol, cubebol, mono menthylsuccinate, menthyl glutarate, derivatives or combinations thereof.

3. Food product according to claim 1, wherein the cooling flavour is menthol, a derivative thereof, menthyl glutarate or N substituted-p-menthane carboxamide.

4. Food product according to claim 3 wherein the amount of N-substituted-p-menthane carboxamide in the final product is from 0.005 to 0.1 wt%.

5. Food product according to any of claims 1-4 wherein the food product comprises a biopolymer selected from the group comprising locust bean gum , gelatin, guar gum, tara gum, amylopectin, methylcellulose, alginate or combinations thereof.

6. Food product according to any of claims 1-5 wherein the protein is selected from the group comprising milk protein, soy protein, pea protein or combinations thereof.

7. Food product according to claim 6 wherein the milk protein originates from the group comprising milk, skimmed milk powder, butter milk powder, butter serum powder, whey powder, whey protein concentrate, whey protein isolate, caseinate.

8. Food product according to any of claims 1-7 wherein the amount of fat is from 15 to 35 wt%, more preferred from 20 to 35 wt%.

9. Process for the preparation of a food product according to any of the previous claims, said process comprising the steps of
a) preparation of an aqueous phase comprising protein and optionally biopolymer
b) mixing the aqueous phase with a fat phase at a temperature of a about 40 to 70 °C
c) heating the mixture obtained in step (b) for pasteurisation or sterilisation
d) homogenisation of the mixture of step (c) at a pressure of between 100 and 400 bar, preferably at a temperature above the melting temperature of the fat
e) acidification to a pH from 4.2 to 5.5
g) addition of cooling flavour
h) homogenisation at a pressure of between 100 and 400 bar at a temperature above the melting point of the fat.

## Patentansprüche

1. Streichfähiges Nahrungsmittelprodukt, das eine dispergierte Ölphase und eine kontinuierliche wässrige Phase umfasst, wobei das Produkt 10 bis 40 Gew.-% Fett und 0,05 bis 15 Gew.-% Protein umfasst, wobei das Nahrungsmittelprodukt einen pH-Wert von 3,7 bis 5,5 hat, **dadurch gekennzeichnet, dass** das Nahrungsmittelprodukt 0,001 bis 1 Gew.-% eines Kühlaromas umfasst.

2. Nahrungsmittelprodukt nach Anspruch 1, wobei das Kühlaroma ausgewählt ist aus der Gruppe aus Menthol, N-substituiertem-p-Menthancarboxamid, Ketal, N,N-Dimethyl-2-ethylbutanamid, N,N-Diethyl-2,2-dimethylpropanamid, 2,3-p-Menthandiol, 3-(1-Menthoxy)propan-1,2-diol, Cubebol, Monomenthylsuccinat, Menthylglutarat, Derivaten oder Kombinationen davon.

3. Nahrungsmittelprodukt nach Anspruch 1, wobei das Kühlaroma Menthol, ein Derivat davon, Menthylglutarat oder N-substituiertes p-Menthancarboxamid ist.

4. Nahrungsmittelprodukt nach Anspruch 3, wobei die Menge an N-substituiertem-p-Menthancarboxamid im Endprodukt 0,005 bis 0,1 Gew.-% ist.

5. Nahrungsmittelprodukt nach einem der Ansprüche 1 bis 4, wobei das Nahrungsmittelprodukt ein Biopolymer umfasst, das aus der Gruppe, umfassend Johannisbrot-Gummi, Gelatine, Guar-Gummi, Tara-Gummi, Amylopektin, Methylcellulose, Alginat oder Kombinationen davon, ausgewählt ist.

6. Nahrungsmittelprodukt nach einem der Ansprüche 1 bis 5, wobei das Protein ausgewählt ist aus der Gruppe, umfassend Milchprotein, Sojaprotein, Erbsenprotein oder Kombinationen davon.

7. Nahrungsmittelprodukt nach Anspruch 6, wobei das Milchprotein aus der Gruppe stammt, die Milch, Magermilchpulver, Buttermilchpulver, Butterserumpulver, Molkepulver, Molkeproteinkonzentrat, Molkeproteinisolat, Caseinat umfasst.

8. Nahrungsmittelprodukt nach einem der Ansprüche 1 bis 7, wobei die Fettmenge 15 bis 35 Gew.-%, bevorzugter 20 bis 35 Gew.-%, ist.

9. Verfahren zur Herstellung eines Nahrungsmittelprodukts nach einem der vorangehenden Ansprüche, wobei das Verfahren die folgenden Schritte umfasst:
a) Herstellung einer wässrigen Phase, die Protein und gegebenenfalls Biopolymer umfasst,
b) Mischen der wässrigen Phase mit einer Fettphase bei einer Temperatur von etwa 40 bis 70°C.
c) Erhitzen des in Stufe (b) erhaltenen Gemisches zur Pasteurisierung oder Sterilisierung,
d) Homogenisierung des Gemischs von Schritt (c) bei einem Druck von zwischen 100 und 400 bar, vorzugsweise bei einer Temperatur oberhalb der Schmelztemperatur des Fetts,
e) Acidifizierung auf einen pH von 4,2 bis 5,5,
g) Zusatz von Kühlaroma,
h) Homogenisierung bei einem Druck von zwischen 100 und 400 bar bei einer Temperatur oberhalb des Schmelzpunkts des Fetts.

## Revendications

1. Produit alimentaire tartinable comprenant une phase d'huile dispersée et une phase aqueuse continue, ledit produit comprenant de 10 à 40 % en poids de graisse et de 0,05 à 15 % en poids de protéine, ledit produit alimentaire ayant une valeur de pH de 3,7 à 5,5, **caractérisé en ce que** le produit alimentaire comprend de 0,001 à 1 % en poids de parfum rafraîchissant.

2. Produit alimentaire selon la revendication 1, dans lequel le parfum rafraîchissant est choisi dans le groupe du menthol, du p-menthane carboxamide substitué en N, du cétal, du N,N-diméthyl-2-éthylbutanamide, du N,N-diéthyl-2,2-diméthyl propanamide, du 2,3-p-menthanediol, du 3-(1-menthoxy) propane-1,2-diol, du cubéol, du mono menthylsuccinate, du glutarate de menthyle, des dérivés et combinaisons de ceux-ci.

3. Produit alimentaire selon la revendication 1, dans lequel le parfum rafraîchissant est du menthol, un dérivé de celui-ci, du glutarate de menthyle ou du p-menthane carboxamide substitué en N.

4. Produit alimentaire selon la revendication 3, dans lequel la quantité de p-menthane carboxamide substitué en N dans le produit final est de 0,005 à 0,1 % en poids.

5. Produit alimentaire selon l'une quelconque des revendications 1 à 4, dans lequel le produit alimentaire comprend un biopolymère choisi dans le groupe comprenant la gomme de caroube, la gélatine, la gomme guar, la gomme tara, l'amylopectine, la méthylcellulose, l'alginate ou des combinaisons de ceux-ci.

6. Produit alimentaire selon l'une quelconque des revendications 1 à 5, dans lequel la protéine est choisie dans le groupe comprenant la protéine de lait, la protéine de soja, la protéine de pois ou des combinaisons de celles-ci.

7. Produit alimentaire selon la revendication 6, dans lequel la protéine de lait provient du groupe comprenant le lait, la poudre de lait écrémé, la poudre babeurre, la poudre de sérum de beurre, la poudre de lactosérum, le concentré de protéine de lactosérum, l'isolat de protéine de lactosérum, le caséinate.

8. Produit alimentaire selon l'une quelconque des revendications 1-7, dans lequel la quantité de graisse est de 15 à 35 % en poids, mieux de 20 à 25 % en poids.

9. Procédé de préparation d'un produit alimentaire selon l'une quelconque des revendications précédentes, ledit procédé comprenant les étapes consistant à :
a) préparer une phase aqueuse comprenant la protéine et optionnellement le biopolymère ;
b) mélanger la phase aqueuse avec une phase grasse à une température d'environ 40 à 70°C ;
c) chauffer le mélange obtenu dans le cadre de l'étape (b) pour le pasteuriser ou le stériliser ;
d) homogénéiser le mélange de l'étape (c) à une pression entre 100 et 400 bars, de préférence à une température supérieure à la température de fusion de la graisse ;
e) acidifier à un pH de 4,2 à 5,5 ;
f) ajouter un parfum rafraîchissant ;
g) homogénéiser à une pression entre 100 et 400 bars à une température supérieure au point de fusion de la graisse.
